# EUROPEAN PATENT SPECIFICATION

(11) **EP 0 709 122 B1**
(45) Date of publication and mention of the grant of the patent: **28.02.2001**
(21) Application number: 95306047.2
(22) Date of filing: 30.08.1995
(51) Int. Cl.: B01D 53/04, A23L 3/3427

(54) **Adsorbate removal**
Entfernung von Adsorbat
Elimination d'adsorbant

(30) Priority: 26.10.1994 GB 9421535
(43) Date of publication of application: 01.05.1996
(73) Proprietor: The BOC Group plc, Windlesham Surrey GU20 6HJ (GB)
(72) Inventor: Garrett, Michael Ernest, Woking, Surrey, GU22 7XR (GB); Bülow, Martin, Basking Rodge, New Jersey 07920 (US)
(74) Representative: Gough, Peter

(56) References cited:
- EP-A- 0 467 668
- EP-A- 0 565 827
- EP-A- 0 654 295
- DE-A- 2 928 138

## Description

The present invention relates to a method and apparatus for removing a first component from a gas stream and relates particularly, but not exclusively, to the removal of one or more components of air by an adsorption process.

Presently known adsorption processes employ an adsorbent through which a gas containing the component to be adsorbed is passed for adsorption by said adsorbent. The adsorbent is selected to preferentially adsorb said component and allow others to pass therethrough. Desorption of saturated adsorbent is achieved by altering either the pressure or temperature of the adsorbent such that it releases the component. Such processes are known as pressure and temperature swing adsorption respectively (PSA, TSA).

EP-A-0565827 discloses the control of the atmosphere within a fruit or vegetable preservation or ripening container, in which chambers which adsorb carbon dioxide are regenerated with atmospheric air, then flushed with nitrogen before being again used to adsorb carbon dioxide from the container atmosphere.

DE-A-2928138 and EP-A-0654295 both disclose the regeneration of activated carbon adsorption beds charged with pollutants separated from an exhaust gas stream, in which-the regeneration is effected using steam and the hot, regenerated beds are cooled using the uncleaned exhaust gas.

The present invention utilises a new approach whereby the capacity of the adsorbent for an adsorbed component is varied by the presence of a third component which is itself adsorbed by the adsorbent. The invention is described with reference to the adsorption of ethylene for controlled atmosphere maintenance and its regeneration, however, the principle can be applied far more widely than this.

According to the present invention there is provided a method of removing a first component from a first gas stream containing said component comprising the steps of:
(a) passing said first component containing first stream through an adsorbent thereby to adsorb said first component into said adsorbent;
(b) discontinuing the flow of said first stream and passing a second stream containing a more readily adsorbed component through said adsorbent, thereby to desorb said first component and replace it with said more readily adsorbed component;
(c) discontinuing the flow of said second stream and passing a third stream having a lower concentration of said more readily adsorbed component than said second stream through said adsorbent thereby to desorb said more readily adsorbed component from said adsorbent, and
(d) repeating steps (a) to (c), characterised in that said third stream comprises said first stream, in that said second stream is at ambient air temperature, and in that the adsorbent is operated at ambient air temperature.

Advantageously, the more readily adsorbed component comprises a liquid, preferably water or alternatively may comprise a gas or a liquid forming a component of a gaseous stream.

Conveniently, the gaseous stream comprises ambient air.

In a particularly advantageous arrangement additional quantities of said more readily adsorbed component may be added to said second stream prior to its passage through said adsorbent.

In one arrangement the first stream may comprise the atmosphere from within a container and said first stream is returned to said container after passing through said adsorbent.

Conveniently, the first stream may comprise air.

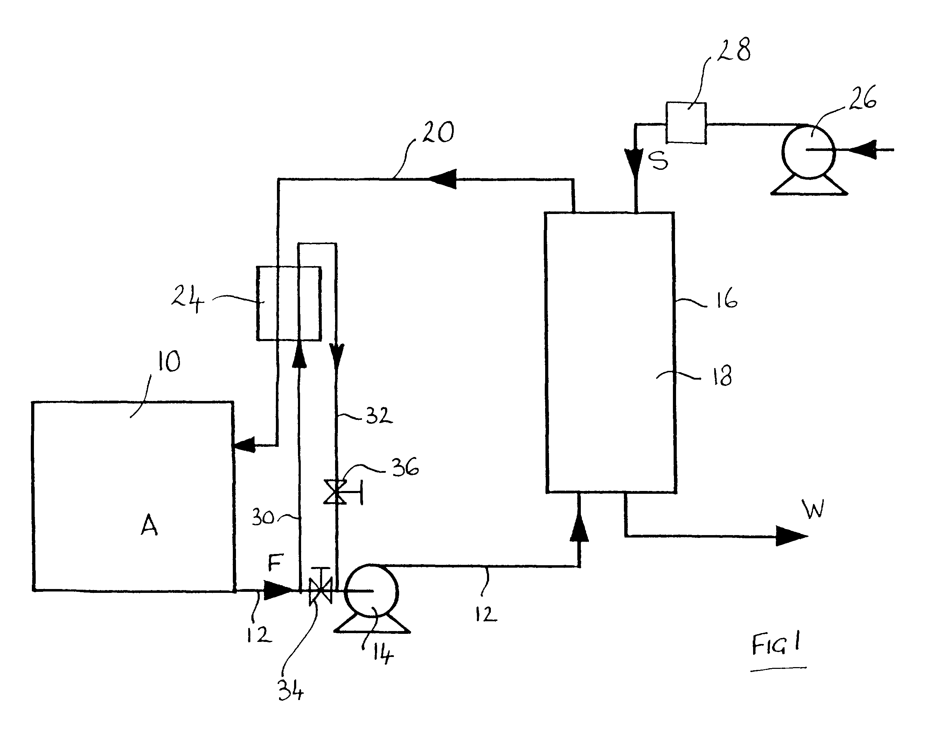

The present invention will now be more particularly described by way of example only with reference to Figure 1 attached hereto which is a schematic representation of an apparatus for adsorbing in accordance with the present invention.

Referring to Figure 1 a container 10 suitable for the storage of perishable foodstuffs, such as fruit, is provided with a pipe 12 for withdrawing the atmosphere therefrom to form a first stream F. Pump 14 directs withdrawn atmosphere to an adsorption column 16 containing an absorbent 18 which preferentially adsorbs a selected component, such as for example ethylene, of said atmosphere. The remaining components of said atmosphere are directed back to the container via pipe 20. Upon saturation of the adsorbent 18, the flow of container atmosphere is terminated by, for example, switching off pump 14. Regeneration of the adsorbent 18 is simply achieved by passing a second stream S containing a comparatively high proportion of a more readily adsorbed component through said adsorbent, thereby to desorb said first component and replace it with said more readily adsorbed component, waste gas W being vented to an atmosphere outside the container 10. Upon complete, or substantially complete, desorption of the first component, the second stream is discontinued and replaced with a third stream (which may be the first stream) which has a comparatively low concentration of the more readily adsorbed component and is selected to desorb said more readily adsorbed component and enable said adsorbent to continue adsorbing said first component.

In the particular example shown, the container is used to store fruit and ethylene is adsorbed by adsorbent 18 thereby to prevent, or inhibit, excessive ripening of the fruit during transit. The atmosphere A from within the container 10 will have a relatively high humidity approximately 95%, but because it is normally chilled to about 2°C, will hold comparatively little water. The adsorbent 18 is operated at a temperature above that of the atmosphere in the container, at ambient temperature, and hence the returning atmosphere will be relatively dry with a very much lower humidity. Return atmosphere may pass directly to the container or via a heat exchanger 24 if energy conservation is a premium, the ethylene having been substantially removed from this return gas. The heat exchanger 24 may be provided with an external source of cooling medium (not shown) or may be connected via lines 30, 32 for the flow of cool atmosphere A from container 10. If the second arrangement is adopted, lines 30, 32 may be arranged so as to direct chilled atmosphere A through the heat exchanger at all times or valves 34, 36 may be provided for allowing the flow to be directed either directly to pump 14 or to heat exchanger 24. When the adsorption capacity for ethylene has been reached the adsorbent 18 must be regenerated, this is achieved by using a blower 26 to blow ambient air through the absorbent 18. The ambient air is more highly saturated with water than the container atmosphere and additional water may be added via a humidifier 28 if necessary. The water will form the more readily adsorbed component and will be adsorbed by the adsorbent thereby reducing its capacity for ethylene which is released to the waste gas W and discharged therewith. When the adsorbents 18 capacity for water has been reached, the material is regarded as being regenerated although there will still be some ethylene present. The adsorbent 18 is then connected to a third stream, in this example the atmosphere A from the container 10, which, having a relatively low humidity will dry the bed and raise its capacity for ethylene and facilitating its removal once again.

## Claims

1. A method of removing a first component from a first gas stream containing said component comprising the steps of:
(a) passing said first component containing first stream through an adsorbent thereby to adsorb said first component into said adsorbent;
(b) discontinuing the flow of said first stream and passing a second stream containing a more readily adsorbed component through said adsorbent, thereby to desorb said first component and replace it with said more readily adsorbed component;
(c) discontinuing the flow of said second stream and passing a third stream having a lower concentration of said more readily adsorbed component than said second stream through said adsorbent thereby to desorb said more readily adsorbed component from said adsorbent, and
(d) repeating steps (a) to (c), characterised in that said third stream comprises said first stream, in that said second stream is at ambient air temperature, and in that the adsorbent is operated at ambient air temperature.

2. A method as claimed in Claim 1 characterised in that said more readily adsorbed component comprises a liquid.

3. A method as claimed in Claim 1 or Claim 2 characterised in that said liquid comprises water.

4. A method as claimed in Claim 1 characterised in that said more readily adsorbed component comprises a gas.

5. A method as claimed in Claim 2 characterised in that said liquid forms a component of a gaseous stream.

6. A method as claimed in Claim 5 characterised in that said gaseous stream comprises ambient air.

7. A method as claimed in any one of Claims 1 to 6 characterised by the further step of adding additional quantities of said more readily adsorbed component to said second stream prior to its passage through said adsorbent.

8. A method as claimed in any one of Claims 1 to 7 characterised in that said first stream comprises the atmosphere from within a container and said first stream is returned to said container after passing through said adsorbent.

9. A method as claimed in any one of Claims 1 to 8 characterised in that said first stream comprises air.

10. A method as claimed in Claim 9 wherein the said first component is ethylene.

## Patentansprüche

1. Verfahren zum Abscheiden einer ersten Komponente aus einem ersten Gasstrom, der diese Komponente enthält, mit folgenden Schritten:
a) Leiten des die ersten Komponente enthaltenden ersten Gasstroms durch ein Adsorptionsmittel, um dadurch die erste Komponente an dem Adsorptionsmittel zu adsorbieren,
b) unterbrechen der Strömung des ersten Stroms und Leiten eines zweiten Stroms, der eine leichter adsorbierbare Komponente enthält, durch das Adsorptionsmittel, wobei die erste Komponente desorbiert und durch die leichter adsorbierte Komponente ersetzt wird,
c) Unterbrechen der Strömung des zweiten Stroms und Leiten eines dritten Stroms mit niedrigerer Konzentration der leichter adsorbierten Komponente als der zweite Strom durch das Adsorptionsmittel, wodurch die leichter adsorbierte Komponente aus dem Adsorptionsmittel desorbiert wird, und
d) Wiederholen der Schritte a) bis c), dadurch gekennzeichnet, daß der dritte Strom aus dem ersten Strom besteht, und daß der zweite Strom Umgebungslufttemperatur hat, und daß das Adsorptionsmittel auf Umgebungslufttemperatur betrieben wird.

2. Verfahren nach Anspruch 1, dadurch gekennzeichnet, daß die leichter adsorbierte Komponente aus einer Flüssigkeit besteht.

3. Verfahren nach Anspruch 1 oder 2, dadurch gekennzeichnet, daß die Flüssigkeit Wasser ist.

4. Verfahrn nach Anspruch 1, dadurch gekennzeichnet, daß die leichter adsorbierte Komponente aus einem Gas besteht.

5. Verfahren nach Anspruch 2, dadurch gekennzeichnet, daß die genannte Flüssigkeit eine Komponente eines gasförmigen Stroms bildet.

6. Verfahren nach Anspruch 5, dadurch gekennzeichnet, daß der gasförmige Strom aus Umgebungsluft besteht.

7. Verfahren nach einem der Ansprüche 1 bis 6, gekennzeichnet durch den weiteren Schritt des Zugebens zusätzlicher Mengen der leichter adsorbierten Komponente in den zweiten Strom vor dessen Hindurchleiten durch das Adsorpticnsmittel.

8. Verfahren nach einem der Ansprüche 1 bis 7, dadurch gekennzeichnet, daß der erste Strom aus der Atmosphäre aus dem Inneren eines Containers besteht und daß der erste Strom nach dem Hindurchgleiten durch das Adsorptionsmittel in den Container zurückgeleitet wird.

9. Verfahren nach einem der Ansprüche 1 bis 8, dadurch gekennzeichnet, daß der erste Strom aus Luft besteht.

10. Verfahren nach Anspruch 9, wobei die genannte erste Komponente Ethylen ist.

## Revendications

1. Procédé d'élimination d'un premier composant d'un premier flux de gaz contenant ledit composant, comprenant les étapes consistant à:
(a) faire passer ledit premier flux de gaz contenant ledit premier composant dans un adsorbant afin de faire adsorber ledit premier composant dans ledit adsorbant ;
(b) interrompre l'écoulement dudit premier flux et faire passer un second flux contenant un composant plus facilement adsorbé dans ledit adsorbant, de manière à désorber ledit premier composant et à le remplacer par ledit composant plus facilement adsorbé ;
(c) interrompre l'écoulement dudit second flux et faire passer dans ledit adsorbant un troisième flux ayant une concentration en dit composant plus facilement adsorbé inférieure à celle dudit second flux, de manière à désorber ledit composant plus facilement adsorbé dudit adsorbant; et
(d) répéter les étapes (a) à (c), ***caractérisé en ce que*** ledit troisième flux comprend ledit premier flux, ***en ce que*** ledit second flux est à température de l'air ambiant, et ***en ce que*** ledit adsorbant est utilisé à température de l'air ambiant.

2. Procédé selon la Revendication 1, ***caractérisé en ce que*** ledit composant plus facilement adsorbé comprend un liquide.

3. Procédé selon la Revendication 1 ou la Revendication 2, ***caractérisé en ce que*** ledit liquide comprend l'eau.

4. Procédé selon la Revendication 1, ***caractérisé en ce que*** ledit composant plus facilement adsorbé comprend un gaz.

5. Procédé selon la Revendication 2, ***caractérisé en ce que*** ledit liquide forme un composant d'un flux gazeux.

6. Procédé selon la Revendication 5, ***caractérisé en ce que*** ledit flux gazeux comprend l'air ambiant.

7. Procédé selon l'une quelconque des Revendications 1 à 6, ***caractérisé par*** l'étape supplémentaire d'ajout de quantités additionnelles de dit composant plus facilement adsorbé audit second flux avant son passage dans ledit adsorbant.

8. Procédé selon l'une quelconque des Revendications 1 à 7, ***caractérisé en ce que*** ledit premier flux comprend l'atmosphère présente à l'intérieur d'un conteneur et ledit premier flux est renvoyé dans ledit conteneur après passage dans ledit adsorbant.

9. Procédé selon l'une quelconque des Revendications 1 à 8, ***caractérisé en ce que*** ledit premier flux comprend l'air.

10. Procédé selon la Revendication 9, dans lequel ledit premier composant est l'éthylène.
